# EUROPÄISCHE PATENTSCHRIFT

(11) **EP 1 811 213 B1**
(45) Veröffentlichungstag und Bekanntmachung des Hinweises auf die Patenterteilung: **08.09.2010**
(21) Anmeldenummer: 07000153.2
(22) Anmeldetag: 05.01.2007
(51) Int. Cl.: F16K 3/08, F16K 24/04

(54) **Entlüftungsvorrichtung für hydraulische Systeme**
Venting device for hydraulic systems
Dispositif de ventilation destiné aux systèmes hydrauliques

(30) Priorität: 18.01.2006 DE 202006000800 U
(43) Veröffentlichungstag der Anmeldung: 25.07.2007
(73) Patentinhaber: FTE automotive GmbH, 96106 Ebern (DE)
(72) Erfinder: Derra, Hubert, 96166 Neubrunn (DE); Gebert, Stefan, 96242 Sonnefeld (DE); Mix, Andreas, 97437 Haßfurt (DE); Müller, Robert, 96126 Maroldsweisach (DE); Schor, Wolfgang, 96106 Ebern (DE); Schneier, Jochen, 96199 Zapfendorf (DE)
(74) Vertreter: Oppermann, Mark

(56) Entgegenhaltungen:
- WO-A-2006/049842
- DE-A1- 10 155 793
- US-A- 1 511 692
- US-A1- 2005 121 642

## Beschreibung

### TECHNISCHES GEBIET

Die Erfindung bezieht sich auf eine Entlüftungsvorrichtung für hydraulische Systeme, insbesondere hydraulische Kupplungsbetätigungssysteme für Kraftfahrzeuge, entsprechend dem Oberbegriff des Anspruchs 1.

Derartige Entlüftungsvorrichtungen dienen der Entlüftung des hydraulischen Systems beim Befüllen mit dem flüssigen Druckmittel. Nach Beendigung des Befüllvorgangs und Entlüftung des hydraulischen Systems über die ventilartige Entlüftungsvorrichtung ist das Entlüftungselement der Entlüftungsvorrichtung von seiner Entlüftungsstellung in seine abgedichtete Schließstellung zu bewegen. In der Schließstellung ist zur Vermeidung unerwünschter Leckagen eine zuverlässige Abdichtung der Entlüftungsvorrichtung erforderlich. Hierbei kommt der Ausbildung und der Anordnung des Dichtungselements eine besondere Bedeutung zu.

### STAND DER TECHNIK

Bei einer bekannten Entlüftungsvorrichtung (DE-A-101 55 793) der eingangs angegebenen Ausführung sind für die Ausbildung und Anordnung des Dichtungselements verschiedene Ausführungsbeispiele angegeben, bei denen in dichtendem Zustand der Entlüftungsvorrichtung das dort als Entlüftungsstopfen bezeichnete Entlüftungselement und das Gehäuse gegeneinander radial abgedichtet sind. Hierbei erfolgt bei allen Ausführungsbeispielen eine Umlenkung des Entlüftungsstroms vom axialen Verlauf in mindestens einen annähernd radialen Verlauf, wodurch Luftblasen an den Stellen des Strömungsrichtungswechsels hängen bleiben können und die Entlüftung behindern.

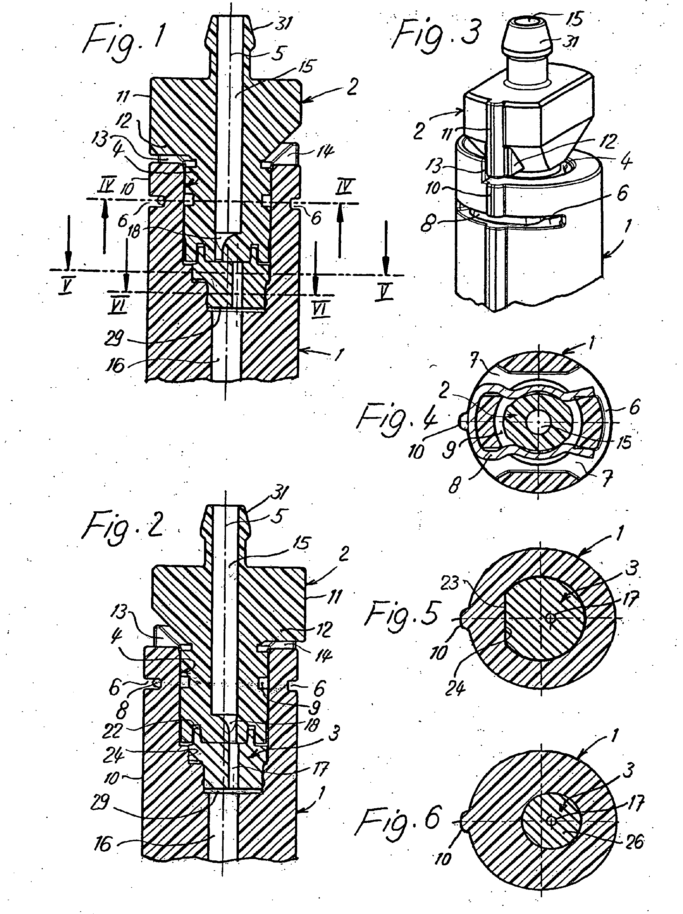

Bei einem Ausführungsbeispiel (Fig. 1, 2) dieser bekannten Entlüftungsvorrichtung ist als Dichtungselement ein O-Ring vorgesehen, der in eine ellipsenförmige Umfangsnut des Entlüftungselements eingelegt ist. Dadurch ergibt sich eine labile Montagelage des O-Rings im Vormontagezustand, wodurch der O-Ring bei loser Behälterbevorratung der Entlüftungselemente leicht abgleiten kann. Bei der axialen Montage des Entlüftungselements in der Ausnehmung des Gehäuses können unterschiedliche Pressungen des O-Rings und damit Dichtheitsprobleme auftreten. Außerdem wird der O-Ring beim Drehen des Entlüftungselements in die Entlüftungsstellung über einen in der Gehäusewandung befindlichen Entlüftungsspalt hinwegbewegt, so daß er dabei beschädigt werden kann. Beim Entlüftungsvorgang kann bei Auftreten eines hohen Entlüftungsdruckes der O-Ring in den Entlüftungsspalt verpreßt (Spaltextrusion) und beim nachfolgenden Schließvorgang beschädigt/abgeschert werden.

Bei einem anderen Ausführungsbeispiel (Fig. 3) dieser bekannten Entlüftungsvorrichtung ist das Dichtungselement als Schlauchabschnitt ausgebildet, welcher in einem Spaltraum zwischen der zylindrischen Gehäuseinnenfläche und einer zylindrischen Außenfläche des Entlüftungselements angeordnet ist und dabei gegen beide Flächen abdichten soll. Zu diesem Zweck muß offenbar der Schlauchabschnitt gegenüber dem Spaltraum ein Übermaß in seiner Wanddicke aufweisen, so daß er bei der Montage unter erheblichen Kraftaufwand und elastischer Verformung in den Spaltraum einzupressen ist, wodurch nicht nur die Montage erschwert wird, sondern auch die Dichtfunktion beeinträchtigende Beschädigungen auftreten können.

### DARSTELLUNG DER ERFINDUNG

Der Erfindung liegt die Aufgabe zugrunde, eine Entlüftungsvorrichtung bereitzustellen, die einfach herzustellen und zu montieren ist, eine restlose störungsfreie Entlüftung des hydraulischen Systems ermöglicht und im Betrieb des hydraulischen Systems zuverlässig dicht ist.

Diese Aufgabe wird erfindungsgemäß durch die im Patentanspruch 1 angegebenen Merkmale gelöst. Vorteilhafte und/oder zweckmäßige Weiterbildungen der Erfindung sind in den Patentansprüchen 2 bis 7 angegeben und werden nachfolgend ebenfalls näher erläutert.

Erfindungsgemäß ist bei einer Entlüftungsvorrichtung für hydraulische Systeme, insbesondere hydraulische Kupplungsbetätigungssysteme für Kraftfahrzeuge, die ein an die Druckmittelleitung anschließbares Gehäuse und ein in eine Ausnehmung des Gehäuses eingesetztes Entlüftungselement umfaßt, das zwischen einer Entlüftungsstellung und einer abgedichteten Stellung im Gehäuse um eine Drehachse begrenzt drehbar und im Gehäuse gegen axiale Bewegungen gesichert ist, wobei ein Dichtungselement zur Abdichtung zwischen dem Gehäuse und dem Entlüftungselement vorgesehen ist, und im Gehäuse und im Entlüftungselement axiale Entlüftungsbohrungen koaxial miteinander, mit der Ausnehmung im Gehäuse und mit der Drehachse angeordnet sind; das Dichtungselement unverdrehbar in das Gehäuse abdichtend eingesetzt und weist eine bezüglich der Drehachse exzentrische aber dazu parallele Durchgangsbohrung auf, die in der Entlüftungsstellung axial fluchtend an einen entsprechend exzentrisch angeordneten Kanal sich verjüngenden Querschnitts der Entlüftungsbohrung im Entlüftungselement anschließt, wobei die dem Entlüftungselement zugekehrte Dichtfläche des Dichtungselements dem Entlüftungselement in dessen abgedichteter Stellung unter der Einwirkung des Druckmittels auf die dem Gehäuse zugekehrte Fläche des Dichtungselements selbstverstärkend abdichtend angedrückt ist.

Nach dem Grundgedanken der Erfindung erfolgt die Durchströmung der Entlüftungsvorrichtung beim Entlüftungsvorgang in geradliniger axialer Richtung ohne Strömungsumlenkungen, während in der abgedichteten Schließstellung der auf das Dichtungselement einwirkende Druck des flüssigen Druckmittels das Dichtungselement selbstverstärkend gegen die zugeordneten Dichtungsflächen drückt. Die sich selbstverstärkende Abdichtung ermöglicht eine geringere Vorspannung des gummielastischen Dichtungselements, was zu einer Verringerung der Betätigungskraft bei Drehungen des Entlüftungselements führt. Bei Drehbetätigungen des Entlüftungselements gleiten Stirnflächen des Entlüftungselements und des Dichtungselements, nämlich die Dichtfläche am Dichtungselement und die Gegendichtfläche am Entlüftungselement, drehend aufeinander, so daß dabei die Gefahr von das Dichtungselement möglicherweise beschädigenden Verformungen sehr verringert ist. Bei der Herstellung des erfindungsgemäßen Lüftungselements ergibt sich für seine Spritzformung aus Kunststoff eine Fertigungsvereinfachung, weil mit einer einfachen geteilten Form mit einem Längsschieber zur Erzeugung der axialen Entlüftungsbohrung gearbeitet werden kann, während der Einsatz eines Querschiebers zur Erzeugung von Querausnehmungen wie Querbohrungen vermieden ist.

Die Entlüftungsvorrichtung kann derart ausgebildet sein, daß die dem Entlüftungselement zugekehrte Dichtfläche des Dichtungselements von einer an dieses angeformten rohrabschnittsförmigen Kreisringrippe umgeben ist, die koaxial zur Drehachse angeordnet ist und die zur Aufnahme in eine komplementäre Ringnut bestimmt ist, welche in die planparallel zur Dichtfläche angeordnete Gegendichtfläche des Entlüftungselements eingeformt ist, und daß die Durchgangsbohrung im Dichtungselement unmittelbar an die Entlüftungsbohrung im Gehäuse geradlinig angeschlossen ist und in der Dichtfläche endet, während der Kanal der Entlüftungsbohrung im Entlüftungselement in der Gegendichtfläche endet. Bei dieser Ausbildung der Entlüftungsvorrichtung kann das Dichtungselement am Entlüftungselement vorteilhaft vormontiert werden, indem die Kreisringrippe des Dichtungselements in die Ringnut des Entlüftungselements eingeführt wird. Das so vormontierte Modul kann dann in entsprechender Drehlage in die Ausnehmung des Gehäuses eingeführt werden. Bei der Drehbetätigung des Entlüftungselements dienen dessen Ringnut und die Kreisringrippe des unverdrehbar im Gehäuse angebrachten Dichtungselements als zusätzliche Führungselemente.

Die Verdrehsicherung des Dichtungselements gegenüber dem Gehäuse kann zweckmäßig durch einfache Mittel, nämlich durch umfänglichen Formschluß unter Einbeziehung eines ebenen Flächenpaares, erreicht werden, indem am Außenumfang des Dichtungselements eine ebene Fläche vorgesehen ist, der eine Gegenfläche in der Wandfläche der Ausnehmung im Gehäuse entspricht, wobei die ebene Fläche und die Gegenfläche aneinanderliegen, wenn das Dichtungselement in das Gehäuse eingesetzt ist.

Das einteilig aus einem gummielastischen Werkstoff geformte Dichtungselement kann im Verfolg des Erfindungsgedankens in Achsrichtung gesehen eine charakteristische Formgebung haben, nämlich dergestalt, daß das Dichtungselement in axialer Richtung gesehen einen an die Kreisringrippe anschließenden Flansch und einen daran anschließenden im wesentlichen zylindrischen Schaft aufweist, wobei die Kreisringrippe und der Flansch zueinander und zur Drehachse koaxial angeordnet sind, während der Schaft mit der Durchgangsbohrung koaxial angeordnet ist, und wobei die ebene Fläche am Flansch vorgesehen ist. Wesentlich für die Schließfunktion und Öffnungsfunktion der ventilartig zusammenwirkenden Dichtfläche des Dichtungselements mit der Gegendichtfläche des Entlüftungselements ist hier der Exzenterversatz zwischen der Drehachse, bzw. der mit der Drehachse koaxialen Bereiche des Dichtungselements, und der Durchgangsbohrung des Dichtungselements.

Die Ausnehmung im Gehäuse kann ferner als Stufenbohrung ausgebildet sein, die in ihrem äußeren Bereich dem Entlüftungselement und in ihrem mittleren sowie ihrem inneren Bereich der Formgebung des Dichtungselements komplementär angepaßt ist, indem deren äußerer größter Durchmesser etwa dem Durchmesser des in die Ausnehmung hineinreichenden Bereichs des Entlüftungselements entspricht, deren mittlerer Durchmesser etwa dem Durchmesser des Flansches des Dichtungselements entspricht und deren innerer kleinster Durchmesser etwa dem Durchmesser des zylindrischen Schafts des Dichtungselements entspricht, wobei die Bereiche des größten Durchmessers und des mittleren Durchmessers zueinander koaxial und mit der Drehachse übereinstimmend vorgesehen sind, während der Bereich des kleinsten Durchmessers gegenüber den Bereichen des größten und des mittleren Durchmessers um das Maß der Exzentrizität zwischen der Drehachse und der Durchgangsbohrung im Dichtungselement versetzt angeordnet ist.

Ist das Dichtungselement im Bereich seines Schafts mit einem über den Schaftumfang durchgehend angeformten Ringwulst versehen, dessen Außendurchmesser zur Erzielung einer statischen Abdichtung im inneren Bereich der Stufenbohrung größer ist als der innere kleinste Durchmesser der Stufenbohrung, wird bei Anbringung des Dichtungselements in der Ausnehmung des Gehäuses vorteilhaft eine statische Abdichtung des Dichtungselements gegenüber dem Gehäuse erzielt, indem der am Dichtungselement angeformte Ringwulst bei Einführung des Dichtelements elastisch verformt wird.

Für die gewünschte selbstverstärkende Abdichtung zwischen Gehäuse und Dichtungselement wird schließlich eine Ausgestaltung der Entlüftungsvorrichtung bevorzugt, bei der die axiale Länge des inneren Bereichs der Stufenbohrung größer ist als die axiale Länge des Schafts des Dichtungselements, so daß ein axialer Spalt zwischen dem Gehäuse und dem Dichtungselement gebildet ist. Aufgrund dieser Spaltbildung steht praktisch die volle untere Stirnfläche des Dichtungselements als hydraulische Wirkfläche zur Verfügung.

### KURZE BESCHREIBUNG DER ZEICHNUNGEN

Weitere Einzelheiten der Erfindung werden nachfolgend anhand der ein Ausführungsbeispiel darstellenden Zeichnungen näher erläutert. Darin zeigt:
- Fig. 1: einen Längsschnitt durch die Entlüftungsvorrichtung in Schließstellung,
- Fig. 2: den Längsschnitt ähnlich Fig. 1, jedoch in Entlüftungsstellung des Entlüftungselements,
- Fig. 3: eine perspektivische Außenansicht der Entlüftungsvorrichtung,
- Fig. 4: den Querschnitt durch die Entlüftungsvorrichtung gemäß der Schnittverlaufslinie IV-IV in Fig. 1,
- Fig. 5: den Querschnitt durch die Entlüftungsvorrichtung gemäß der Schnittverlaufslinie V-V in Fig. 1,
- Fig. 6: den Querschnitt durch die Entlüftungsvorrichtung gemäß der Schnittverlaufslinie VI-VI in Fig. 1,
- Fig. 7: einen Längsschnitt durch das Entlüftungselement in der in Fig. 1 gezeigten Stellung,
- Fig. 8: eine Seitenansicht des Entlüftungselements,
- Fig. 9: eine perspektivische Außenansicht des Entlüftungselements,
- Fig. 10: die Draufsicht auf das Dichtungselement und
- Fig. 11: den Längsschnitt durch das Dichtungselement entsprechend der Schnittverlaufslinie XI-XI in Fig. 10.
In den Zeichnungen sind die Fig. 10 und 11 gegenüber den Fig. 1 bis 9 in einem größeren Maßstab dargestellt.

### DETAILLIERTE BESCHREIBUNG DES AUSFÜHRUNGSBEISPIELS

Die Fig. 1 bis 6 zeigen die Entlüftungsvorrichtung im fertig montierten Zustand, in welchem sich das Gehäuse 1, das Entlüftungselement 2 und das Dichtungselement 3 in ihrer endgültigen axialen Relativlage befinden. Das Gehäuse 1 ist an seinem unteren, dem nicht dargestellten hydraulischen System zugekehrten Ende abgebrochen dargestellt, weil die Erfindung nur den dargestellten Bereich betrifft.

Das Gehäuse 1 besitzt eine weiter unten näher beschriebene Ausnehmung 4, in welche das Entlüftungselement 2 eingesetzt ist, das um eine Drehachse 5 begrenzt relativ zum Gehäuse 1 und zum Dichtungselement 3 drehbar ist. Das Gehäuse 1 ist ausgehend von zwei in derselben Querschnittsebene gegenüberliegenden Außennuten 6 mit zwei Durchstichen 7 versehen, welche der Aufnahme einer nach Art einer Haarnadelfeder ausgebildeten Sicherungsspange 8 dienen. Die Sicherungsspange 8 greift, wie am besten aus Fig. 4 ersichtlich ist, an gegenüberliegenden Stellen in eine Umfangsnut 9 des Entlüftungselements 2, die sich in derselben Querschnittsebene wie die beiden Außennuten 6 befindet, ein und sichert damit das Entlüftungselement 2 gegen axiale Bewegungen im Gehäuse 1.

Das Gehäuse 1 besitzt, abgesehen von einer parallel zur Drehachse 5 verlaufenden äußeren Indexrippe 10, eine zylindrische Außenform. Eine entsprechende Indexrippe 11 befindet sich auch am Entlüftungselement 2. Wenn die beiden Indexrippen 10, 11 miteinander fluchten, wie das in Fig. 1 und 3 gezeigt ist, befindet sich das Entlüftungselement 2 in Schließstellung. Bestandteil der Indexrippe 11 am Entlüftungselement 2 ist eine Anschlagnase 12, welcher zwei Anschlagflächen 13 und 14 am Gehäuse 1 zugeordnet sind. Die Anschlagflächen 13 und 14 sind um einen Drehwinkel von 180° voneinander entfernt, so daß die Anschlagnase 12 nach jeweils einer halben Drehung des Entlüftungselements 2 um die Drehachse 5 auf eine der Anschlagflächen 13 oder 14 trifft. Die Anschlagfläche 13 ist der Schließstellung und die Anschlagfläche 14 ist der Entlüftungsstellung zugeordnet.

Im Entlüftungselement 2 und im Gehäuse 1 befindet sich jeweils eine axiale Entlüftungsbohrung 15 bzw. 16, die koaxial miteinander angeordnet sind und deren Mittellinien mit der Drehachse 5 übereinstimmen. Die Entlüftungsbohrungen 15, 16 sind in allen Relativstellungen zwischen Entlüftungselement 2 und Gehäuse 1 miteinander fluchtend angeordnet.

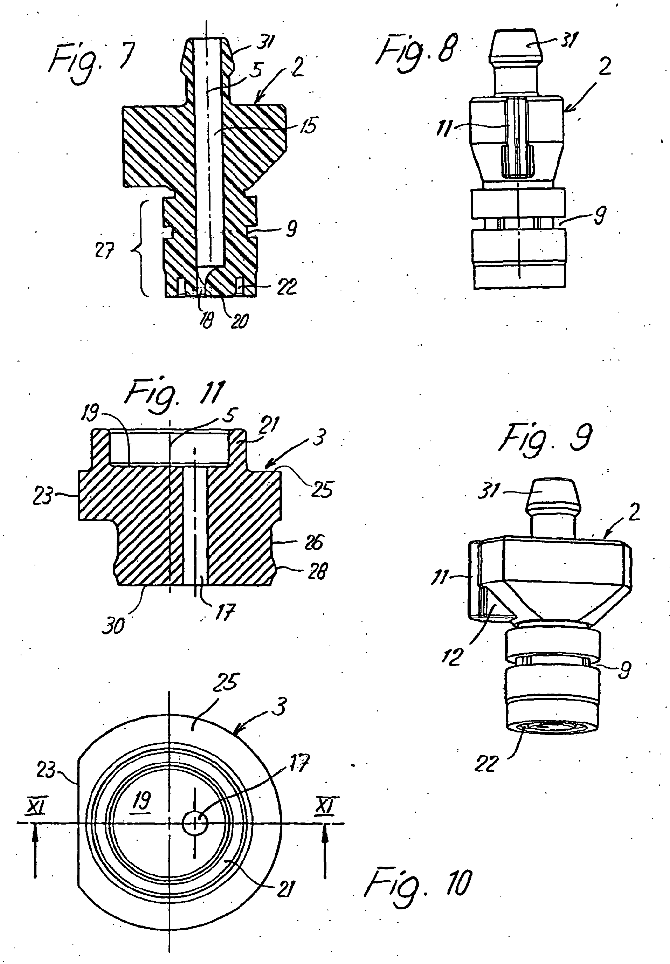

Das Dichtungselement 3, dessen Ausbildung am besten aus den Fig. 10 und 11 hervorgeht, ist auf noch zu beschreibende Weise unverdrehbar in das Gehäuse 1 eingesetzt und weist eine bezüglich der Drehachse 5 exzentrische aber dazu parallele Durchgangsbohrung 17 auf, die der Entlüftung des hydraulischen Systems dient. Die Entlüftungsbohrung 15 besitzt an ihrem dem Dichtungselement 3 benachbarten Ende einen Kanal 18, dessen Querschnitt sich ausgehend vom Querschnitt der Entlüftungsbohrung 15 in Richtung auf das Dichtungselement 3 verengt, bis sein Querschnitt etwa dem Querschnitt der Durchgangsbohrung 17 im Dichtungselement 3 entspricht. Der Kanal 18 ist jedenfalls in seinem engsten Bereich bezüglich der Drehachse 5 so exzentrisch angeordnet wie die Durchgangsbohrung 17. In der Entlüftungsstellung sind der Kanal 18 und die Durchgangsbohrung 17 miteinander fluchtend ausgerichtet, wie Fig. 2 verdeutlicht.

Die dem Entlüftungselement 2 zugekehrte Dichtfläche 19 des Dichtungselements 3 liegt einer Gegendichtfläche 20 am Entlüftungselement 2 an, so daß unter Einwirkung des Druckes des im hydraulischen System befindlichen Druckmittels das Dichtungselement 3 mit seiner Dichtfläche 19 der Gegendichtfläche 20 am Entlüftungselement 2 selbstverstärkend abdichtend angedrückt wird, wenn sich das Entlüftungselement 2 in seiner Schließstellung befindet (Fig. 1).

Die dem Entlüftungselement 2 zugekehrte Dichtfläche 19 des Dichtungselements 3 ist von einer an dieses angeformten rohrabschnittsförmigen Kreisringrippe 21 umgeben, die koaxial zur Drehachse 5 angeordnet ist. Die Kreisringrippe 21 ist zur Aufnahme in eine komplementäre Ringnut 22 bestimmt, welche in die planparallel zur Dichtfläche 19 angeordnete Gegendichtfläche 20 des Entlüftungselements 2 eingeformt ist. Auf diese Weise kann das Dichtungselement 3 am Entlüftungselement 2 vormontiert werden, was die Vereinigung dieser beiden Elemente mit dem Gehäuse 1, d.h. die Einführung dieser Elemente in die Ausnehmung 4 des Gehäuses, sehr erleichtert.

Die Durchgangsbohrung 17 im Dichtungselement 3 ist in allen Drehstellungen des Entlüftungselements 2 an die Entlüftungsbohrung 16 im Gehäuse 1 geradlinig angeschlossen und endet in der Dichtfläche 19. Dementsprechend endet der sich verengende Kanal 18 der Entlüftungsbohrung 15 des Entlüftungselements 2 in der Gegendichtfläche 20.

Zur Verdrehsicherung des Dichtungselements 3 im Gehäuse 1 ist am Außenumfang des Dichtungselements 3 eine ebene Fläche 23 vorgesehen, der eine Gegenfläche 24 in der Wandfläche der Ausnehmung 4 im Gehäuse 1 entspricht. Die ebene Fläche 23 und die Gegenfläche 24 liegen aneinander, wenn das Dichtungselement 3 in das Gehäuse 1 eingesetzt ist und verhindern Drehungen des Dichtungselements 3 gegenüber dem Gehäuse 1. Diese Drehsicherungsanordnung ist am deutlichsten aus Fig. 5 entnehmbar.

Wie die Fig. 10 und 11 zeigen, weist das einteilig aus einem gummielastischen Werkstoff geformte Dichtungselement 3 in axialer Richtung gesehen einen an die Kreisringrippe 21 anschließenden Flansch 25 und einen daran anschließenden im wesentlichen zylindrischen Schaft 26 auf. Die Kreisringrippe 21 und der Flansch 25 sind zueinander und zur Drehachse 5 koaxial angeordnet, während der Schaft 26 mit der Durchgangsbohrung 17 koaxial angeordnet ist. Die der Verdrehsicherung dienende ebene Fläche 23 ist am Flansch 25 vorgesehen.

Die Ausnehmung 4 im Gehäuse 1 ist als Stufenbohrung ausgebildet. Der größte Durchmesser der Stufenbohrung entspricht etwa dem Durchmesser des in die Ausnehmung 4 hineinreichenden Bereichs 27 (Fig. 7) des Entlüftungselements 2. Der mittlere Durchmesser der Stufenbohrung entspricht etwa dem Durchmesser des Flansches 25 des Dichtungselements 3. Der innere kleinste Durchmesser der Stufenbohrung entspricht etwa dem Durchmesser des zylindrischen Schafts 26 des Dichtungselements 3. Die Bereiche des größten Durchmessers und des mittleren Durchmessers der Stufenbohrung sind zueinander koaxial angeordnet und stimmen mit der Drehachse 5 überein. Der Bereich des kleinsten Durchmessers der Stufenbohrung ist dagegen gegenüber den Bereichen des größten Durchmessers und des mittleren Durchmessers der Stufenbohrung um das Maß der Exzentrizität zwischen der Drehachse 5 und der Durchgangsbohrung 17 im Dichtungselement 3 versetzt angeordnet.

Das Dichtungselement 3 ist im Bereich seines Schafts 26 mit einem über den Schaftumfang durchgehend angeformten Ringwulst 28 versehen. Der Außendurchmesser des Ringwulstes 28 ist zur Erzielung einer statischen Abdichtung im dem Schaft 26 zugeordneten inneren Bereich der Stufenbohrung größer als der kleinste Durchmesser der Stufenbohrung. Der Ringwulst 28 ist am besten in Fig. 11 zu erkennen.

Die axiale Länge des inneren Bereichs der Stufenbohrung ist etwas größer als die axiale Länge des Schafts 26. Auf diese Weise wird zwischen dem Gehäuse 1 und dem Dichtungselement 3 ein axialer Spalt 29 gebildet, wie aus den Fig. 1 und 2 hervorgeht. Dadurch ist sichergestellt, daß die gesamte untere Fläche 30 (Fig. 11) des Dichtungselements 3 als hydraulische Wirkfläche für die selbstverstärkende Andrückung der Dichtfläche 19 an die Gegendichtfläche 20 am Entlüftungselement 2 dient.

Die Entlüftungsbohrung 15 im Entlüftungselement 2 ist am äußeren Ende desselben durch einen Entlüfterstutzen 31 geführt, welcher für den Anschluß eines Schlauchs vorgesehen ist.

Es wird eine Entlüftungsvorrichtung für Hydrauliksysteme offenbart, umfassend ein an eine Druckmittelleitung anschließbares Gehäuse und ein in eine Gehäuseausnehmung eingesetztes Entlüftungselement, das darin zwischen einer Entlüftungsstellung und einer Dichtstellung um eine Drehachse drehbar und gegen Axialbewegungen gesichert ist, wobei ein Dichtungselement zwischen Gehäuse und Entlüftungselement abdichtet, und im Gehäuse und Entlüftungselement axiale Entlüftungsbohrungen koaxial miteinander, mit der Gehäuseausnehmung und mit der Drehachse angeordnet sind. Um eine einfach herstellbare und montierbare, eine restlose störungsfreie Entlüftung ermöglichende und im Betrieb zuverlässig dichtende Entlüftungsvorrichtung bereitzustellen, ist erfindungsgemäß das Dichtungselement unverdrehbar im Gehäuse eingesetzt und weist eine bezüglich der Drehachse exzentrische aber parallele Durchgangsbohrung auf, die in der Entlüftungsstellung axial fluchtend an einen entsprechend exzentrischen Kanal der Entlüftungsbohrung im Entlüftungselement anschließt, wobei die letzterem zugekehrte Dichtfläche des Dichtungselements dem Entlüftungselement in dessen Dichtstellung unter Druckmitteleinwirkung auf das Dichtungselement selbstverstärkend abdichtend angedrückt ist.

### BEZUGSZAHLENLISTE

- 1: Gehäuse
- 2: Entlüftungselement
- 3: Dichtungselement
- 4: Ausnehmung
- 5: Drehachse
- 6: Außennut
- 7: Durchstich
- 8: Sicherungsspange
- 9: Umfangsnut
- 10: Indexrippe
- 11: Indexrippe
- 12: Anschlagnase
- 13: Anschlagfläche
- 14: Anschlagfläche
- 15: Entlüftungsbohrung
- 16: Entlüftungsbohrung
- 17: Durchgangsbohrung
- 18: Kanal
- 19: Dichtfläche
- 20: Gegendichtfläche
- 21: Kreisringrippe
- 22: Ringnut
- 23: ebene Fläche
- 24: Gegenfläche
- 25: Flansch
- 26: Schaft
- 27: Bereich
- 28: Ringwulst
- 29: Spalt
- 30: untere Fläche
- 31: Entlüfterstutzen

## Patentansprüche

1. Entlüftungsvorrichtung für hydraulische Systeme, insbesondere hydraulische Kupplungsbetätigungssysteme für Kraftfahrzeuge, umfassend ein an die Druckmittelleitung anschließbares Gehäuse (1) und ein in eine Ausnehmung (4) des Gehäuses (1) eingesetztes Entlüftungselement (2), das zwischen einer Entlüftungsstellung und einer abgedichteten Stellung im Gehäuse (1) um eine Drehachse (5) begrenzt drehbar und im Gehäuse (1) gegen axiale Bewegungen gesichert ist, wobei ein Dichtungselement (3) zur Abdichtung zwischen dem Gehäuse (1) und dem Entlüftungselement (2) vorgesehen ist, und im Gehäuse (1) und im Entlüftungselement (2) axiale Entlüftungsbohrungen (15,16) koaxial miteinander, mit der Ausnehmung (4) im Gehäuse (1) und mit der Drehachse (5) angeordnet sind, **dadurch gekennzeichnet, daß** das Dichtungselement (3) unverdrehbar in das Gehäuse (1) abdichtend eingesetzt ist und eine bezüglich der Drehachse (5) exzentrische aber dazu parallele Durchgangsbohrung (17) aufweist, die in der Entlüftungsstellung axial fluchtend an einen entsprechend exzentrisch angeordneten Kanal (18) sich verjüngenden Querschnitts der Entlüftungsbohrung (15) im Entlüftungselement (2) anschließt, und daß die dem Entlüftungselement (2) zugekehrte Dichtfläche (19) des Dichtungselements (3) dem Entlüftungselement (2) in dessen abgedichteter Stellung unter der Einwirkung des Druckmittels auf die dem Gehäuse (1) zugekehrte Fläche (30) des Dichtungselements (3) selbstverstärkend abdichtend angedrückt ist.

2. Entlüftungsvorrichtung nach Anspruch 1, **dadurch gekennzeichnet, daß** die dem Entlüftungselement (2) zugekehrte Dichtfläche (19) des Dichtungselements (3) von einer an dieses angeformten rohrabschnittsförmigen Kreisringrippe (21) umgeben ist, die koaxial zur Drehachse (5) angeordnet ist und die zur Aufnahme in eine komplementäre Ringnut (22) bestimmt ist, welche in die planparallel zur Dichtfläche (19) angeordnete Gegendichtfläche (20) des Entlüftungselements (2) eingeformt ist, und daß die Durchgangsbohrung (17) im Dichtungselement (3) unmittelbar an die Entlüftungsbohrung (16) im Gehäuse (1) geradlinig angeschlossen ist und in der Dichtfläche (19) endet, während der Kanal (18) der Entlüftungsbohrung (15) im Entlüftungselement (2) in der Gegendichtfläche (20) endet.

3. Entlüftungsvorrichtung nach Anspruch 1 oder 2, **dadurch gekennzeichnet, daß** am Außenumfang des Dichtungselements (3) eine ebene Fläche (23) vorgesehen ist, der eine Gegenfläche (24) in der Wandfläche der Ausnehmung (4) im Gehäuse (1) entspricht, und daß die ebene Fläche (23) und die Gegenfläche (24) aneinanderliegen, wenn das Dichtungselement (3) in das Gehäuse (1) eingesetzt ist.

4. Entlüftungsvorrichtung nach einem der Ansprüche 1 bis 3, **dadurch gekennzeichnet, daß** das Dichtungselement (3) in axialer Richtung gesehen einen an die Kreisringrippe (21) anschließenden Flansch (25) und einen daran anschließenden im wesentlichen zylindrischen Schaft (26) aufweist, wobei die Kreisringrippe (21) und der Flansch (25) zueinander und zur Drehachse (5) koaxial angeordnet sind, während der Schaft (26) mit der Durchgangsbohrung (17) koaxial angeordnet ist, und wobei die ebene Fläche (23) am Flansch (25) vorgesehen ist.

5. Entlüftungsvorrichtung nach einem der Ansprüche 1 bis 4, **dadurch gekennzeichnet, daß** die Ausnehmung (4) im Gehäuse (1) als Stufenbohrung ausgebildet ist, deren äußerer größter Durchmesser etwa dem Durchmesser des in die Ausnehmung hineinreichenden Bereichs (27) des Entlüftungselements (2) entspricht, deren mittlerer Durchmesser etwa dem Durchmesser des Flansches (25) des Dichtungselements (3) entspricht und deren innerer kleinster Durchmesser etwa dem Durchmesser des zylindrischen Schafts (26) des Dichtungselements (3) entspricht, wobei die Bereiche des größten Durchmessers und des mittleren Durchmessers zueinander koaxial und mit der Drehachse (5) übereinstimmend vorgesehen sind, während der Bereich des kleinsten Durchmessers gegenüber den Bereichen des größten und des mittleren Durchmessers um das Maß der Exzentrizität zwischen der Drehachse (5) und der Durchgangsbohrung (17) im Dichtungselement (3) versetzt angeordnet ist.

6. Entlüftungsvorrichtung nach einem der Ansprüche 1 bis 5, **dadurch gekennzeichnet, daß** das Dichtungselement (3) im Bereich seines Schafts (26) mit einem über den Schaftumfang durchgehend angeformten Ringwulst (28) versehen ist, dessen Außendurchmesser zur Erzielung einer statischen Abdichtung im inneren Bereich der Stufenbohrung größer ist als der innere kleinste Durchmesser der Stufenbohrung.

7. Entlüftungsvorrichtung nach einem der Ansprüche 1 bis 6, **dadurch gekennzeichnet, daß** die axiale Länge des inneren Bereichs der Stufenbohrung größer ist als die axiale Länge des Schafts (26) des Dichtungselements (3), so daß ein axialer Spalt (29) zwischen dem Gehäuse (1) und dem Dichtungselement (3) gebildet ist.

## Claims

1. Bleed device for hydraulic systems, particularly hydraulic clutch actuating systems for motor vehicles, comprising a housing (1) connectible with the pressure medium duct and a bleed element (2), which is inserted in a recess (4) of the housing (1) and which is capable of limited rotation about an axis (5) of rotation between a bleeding setting and a sealed setting in the housing (1) and is secured in the housing (1) against axial movements, wherein a sealing element (3) for sealing between the housing (1) and the bleed element (2) is provided, and axial bleed bores (15, 16) coaxial with one another, with the recess (4) in the housing (1) and with the axis (5) of rotation are provided in the housing (1) and in the bleed element (2), **characterized in that** the sealing element (3) is sealingly inserted into the housing (1) to be non-rotatable and has a passage bore (17), which is eccentric with respect to the axis (5) of rotation, but parallel thereto and which in the bleeding setting is connected in axial alignment with a correspondingly eccentrically arranged channel (18) of narrowing cross-section of the bleed bore (15) in the bleed element (2), and that the sealing surface (19), which faces the bleed element (2), of the sealing element (3) is pressed with self-intensifying sealing effect against the bleed element (2) in the sealed setting thereof under the action of the pressure medium on the surface (30) of the sealing element (3) facing the housing (1).

2. Bleed device according to claim 1, **characterized in that** the sealing surface (19), which faces the bleed element (2), of the sealing element (3) is surrounded by a circularly annular rib (21) formed thereon and of tube-section shape, the rib being arranged coaxially with the axis (5) of rotation and intended for reception in a complementary annular groove (22) which is formed in the counter-sealing surface (20), which is arranged planoparallelly to the sealing surface (19), of the bleed element (2), and that the passage bore (17) in the sealing element (3) is rectilinearly directly connected with the bleed bore (16) in the housing (1) and ends in the sealing surface (19), whereas the channel (18) of the bleed bore (15) in the bleed element (2) ends in the counter-sealing surface (20).

3. Bleed device according to claim 1 or 2, **characterized in that** provided at the outer circumference of the sealing element (3) is a planar surface (23) corresponding with a counter-surface (24) in the wall surface of the recess (4) in the housing (1) and that the planar surface (23) and the counter-surface (24) bear against one another when the sealing element (3) is inserted in the housing (1).

4. Bleed device according to any one of claims 1 to 3, **characterized in that** the sealing element (3) as seen in axial direction has a flange (25) following the circularly annular rib (21) and a substantially cylindrical shank (26) following the flange, wherein the circularly annular rib (21) and the flange (25) are arranged coaxially with one another and with the axis (5) of rotation, whereas the shank (26) is arranged coaxially with the passage bore (17), and wherein the planar surface (23) is provided at the flange (25).

5. Bleed device according to any one of claims 1 to 4, **characterized in that** the recess (4) in the housing (1) is formed as a stepped bore, the outer largest diameter of which approximately corresponds with the diameter of the region (27) of the bleed element (2) extending into the recess, the mean diameter of which approximately corresponds with the diameter of the flange (25) of the sealing element (3) and the inner smallest diameter of which approximately corresponds with the diameter of the cylindrical shank (26) of the sealing element (3), wherein the regions of the greatest diameter and mean diameter are provided to be coaxial with one another and to correspond with the axis (5) of rotation, whereas the region of the smallest diameter is arranged to be offset relative to the regions of the greatest and mean diameter by the amount of the eccentricity between the axis (5) of rotation and the passage bore (17) in the sealing element (3).

6. Bleed device according to any one of claims 1 to 5, **characterized in that** the sealing element (3) is provided in the region of its shank (26) with an annular bead (28), which is formed to be continuous over the shank circumference and the outer diameter of which is greater than the inner smallest diameter of the stepped bore in order to achieve static sealing in the interior region of the stepped bore.

7. Bleed device according to any one of claims 1 to 6, **characterized in that** the axial length of the inner region of the stepped bore is greater than the axial length of the shank (26) of the sealing element (3) so that an axial gap (29) is formed between the housing (1) and the sealing element (3).

## Revendications

1. Dispositif de purge pour systèmes hydrauliques, notamment des systèmes d'actionnement hydrauliques d'embrayages pour véhicules automobiles, comprenant un carter (1) pouvant être raccordé à la conduite de fluide de pression et un élément de purge (2) inséré dans un évidement (4) du carter (1) et qui peut tourner de manière limitée autour d'un axe de rotation (5), entre une position de purge et une position étanche dans le carter (1), et est bloqué dans le carter (1) à l'encontre de mouvements axiaux, un élément d'étanchéité (3) étant prévu pour assurer l'étanchéité entre le carter (1) et l'élément de purge (2), et des alésages de purge (15, 16) axiaux étant agencés dans le carter (1) et dans l'élément de purge (2), coaxialement les uns avec les autres, avec l'évidement (4) dans le carter (1), et avec l'axe de rotation (5),
**caractérisé en ce que** l'élément d'étanchéité (3) est logé de manière étanche et non rotative dans le carter (1) et présente un alésage de passage (17), qui est excentré par rapport à l'axe de rotation (5) mais est parallèle à celui-ci, et qui, dans la position de purge, se raccorde en alignement axial à un canal (18) de l'alésage de purge (15) dans l'élément de purge (2), ce canal étant agencé de manière excentrée correspondante et présentant une section transversale qui se rétrécit, et **en ce que** la surface d'étanchéité (19) de l'élément d'étanchéité (3), qui est dirigée vers l'élément de purge (2), est pressée contre l'élément de purge (2) dans sa position d'étanchéité, avec un effet d'auto-amplification de l'étanchéité sous l'action du fluide de pression sur la surface (30) de l'élément d'étanchéité (3), dirigée vers le carter (1).

2. Dispositif de purge selon la revendication 1, **caractérisé en ce que** la surface d'étanchéité (19) de l'élément d'étanchéité (3), qui est dirigée vers l'élément de purge (2), est entourée par une nervure annulaire circulaire (21) en forme de tronçon tubulaire, qui est formée sur l'élément d'étanchéité, est agencée coaxialement à l'axe de rotation (5), et est destinée à être reçue dans une rainure annulaire complémentaire (22) formée dans la surface d'étanchéité conjuguée (20) de l'élément de purge (2), qui est agencée de manière parallèle plane à la surface d'étanchéité (19), et **en ce que** l'alésage de passage (17) dans l'élément d'étanchéité (3) est raccordé directement, de manière rectiligne, à l'alésage de purge (16) dans le carter (1) et se termine dans la surface d'étanchéité (19), tandis que le canal (18) de l'alésage de purge (15) dans l'élément de purge (2) se termine dans la surface d'étanchéité conjuguée (20).

3. Dispositif de purge selon la revendication 1 ou la revendication 2, **caractérisé en ce qu'**à la périphérie extérieure de l'élément d'étanchéité (3) est prévue une surface plane (23) à laquelle correspond une surface conjuguée (24) dans la surface de paroi de l'évidement (4) du le carter (1), et **en ce que** la surface plane (23) et la surface conjuguée (24) s'appliquent l'une contre l'autre lorsque l'élément d'étanchéité (3) est logé dans le carter (1).

4. Dispositif de purge selon l'une des revendications 1 à 3, **caractérisé en ce que** l'élément d'étanchéité (3), vu dans la direction axiale, présente un flasque (25), qui se raccorde à la nervure annulaire circulaire (21), et auquel se raccorde un embout sensiblement cylindrique (26), la nervure annulaire circulaire (21) et le flasque (25) étant agencés coaxialement l'un par rapport à l'autre et à l'axe de rotation (5), tandis que l'embout (26) est agencé coaxialement avec l'alésage de passage (17), et la surface plane (23) étant prévue sur le flasque (25).

5. Dispositif de purge selon l'une des revendications 1 à 4, **caractérisé en ce que** l'évidement (4) dans le carter (1) est réalisé sous forme d'alésage étagé dont le plus grand diamètre situé le plus à l'extérieur correspond environ au diamètre de la zone (27) de l'élément de purge (2), qui s'engage dans l'évidement, dont le diamètre moyen correspond environ au diamètre du flasque (25) de l'élément d'étanchéité (3), et dont le diamètre le plus petit situé le plus à l'intérieur correspond environ au diamètre de l'embout cylindrique (26) de l'élément d'étanchéité (3), les zones du diamètre le plus grand et du diamètre moyen étant prévus de manière coaxiale l'une par rapport à l'autre et avec l'axe de rotation (5), tandis que la zone du diamètre le plus petit est agencée de manière décalée par rapport aux zones du plus grand diamètre et du diamètre moyen, d'une valeur égale à l'excentricité entre l'axe de rotation (5) et l'alésage de passage (17) dans l'élément d'étanchéité (3).

6. Dispositif de purge selon l'une des revendications 1 à 5, **caractérisé en ce que** l'élément d'étanchéité (3) est pourvu, dans la zone de son embout (26), d'un bourrelet annulaire (28) formé de manière continue le long de la périphérie de l'embout, et dont le diamètre extérieur, en vue d'obtenir une étanchéité statique dans la zone intérieure de l'alésage étagé, est plus grand que le diamètre intérieur le plus petit de l'alésage étagé.

7. Dispositif de purge selon l'une des revendications 1 à 6, **caractérisé en ce que** la longueur axiale de la zone intérieure de l'alésage étagé, est plus grande que la longueur axiale de l'embout (26) de l'élément d'étanchéité (3), de sorte qu'un interstice axial (29) est formé entre le carter (1) et l'élément d'étanchéité (3).
